Europäisches Patentamt

European Patent Office

Office européen des brevets

(11) Publication number: **0 239 010**
A2

# (12) EUROPEAN PATENT APPLICATION

(21) Application number: **87104050.7**

(22) Date of filing: **19.03.87**

(51) Int. Cl.⁴: **G 02 C 5/22**

(30) Priority: **24.03.86 IT 4154586**

(43) Date of publication of application: **30.09.87**
**Bulletin 87/40**

(84) Designated Contracting States: **CH DE FR LI**

(71) Applicant: **VISOTTICA S.p.A., Via Vecchia Trevigiana, 11, I-31058 Susegana (Province of Treviso) (IT)**

(72) Inventor: **Montalban, Rinaldo, Via XX Settembre 75, I-31015 Conegliano Treviso (IT)**

(74) Representative: **Modiano, Guido et al, MODIANO, JOSIF, PISANTY & STAUB Modiano & Associati Via Meravigli, 16, I-20123 Milan (IT)**

(54) **Elastic hinge for spectacles.**

(57) The hinge (1) can be associated with the front part of metal-frame spectacles. The hinge comprises recesses (3, 4) for association with lens-bearing tubes and a hinge pivot (7) for the rod (8). A spring (14) and an element having a stem (16) and a head (15) are adapted for defining two stable positions for said rod (8) and for allowing an additional elastic opening thereof, by co-operation between the head (15) and notches (11, 12) formed in a disk-like element (10) asociated with the rod (8).

# ELASTIC HINGE FOR SPECTACLES

The present invention relates to an elastic hinge for spectacles.

More in particular, the type of hinge illustrated in the present patent can be related to metal-frame spectacles, in which the lenses are supported by small tubes or bezels which are associated with the rods or stems.

Many types of spectacles are known, provided with a metal structure, in which the small tubes which form the circles of tne lenses and thus the entire front part are associated by welding and screw couplings to a hinge which allows the articulation of the rods.

Usually, when it is desired to obtain a hinge of the elastic type, the devices suitable for providing this particular configuration are contained in box-like elements associated with the rod and not with the part of hinge which is fixed to the front part.

This implies numerous types of remarkably complicated manufacturing processes, both for the part of the hinge which is to be fixed to the tubes and for the part of the hinge which is fixed to the rod.

The object of the present invention is to provide a hinge which is of the monolithic type, this term meaning that all its component parts, both those which allow the possibility of articulation of the rod and those which allow the elastic positioning in two preset positions and in one of additional opening, as well as the means of connection to the lens-bearing tubes, are in a single body.

The consequent main aim is to provide a monolithic body in which it is possible to concentrate all the various functions of connection and elasticity.

Still another object is to provide a particularly simple hinge which allows to reduce the various operating phases of production and assembling.

Still another object is to provide a particularly compact hinge with such a shape as to have no influence on the aesthetical characteristics of the frame on which it will be used.

This aim, and other objects which will become apparent hereinafter, are achieved by an elastic hinge for spectacles, characterized in that it comprises a monolithic body, provided, on one side, with seats for the engagement and the coupling of a lens-bearing tube and, on the other side with a hinge for connection to the rod, in said body there being provided the seat for elastic means adapted for interacting with the head of the rod, said head being in the shape of a cam, providing two stable positions of closing and opening and a position of additional opening with elastic return.

Further characteristics and advantages of the invention will become apparent from the detailed description of a number of preferred embodiments thereof, illustrated only by way of non-limitative example in the accompanying drawing tables, where:

Fig. 1 is a partial cross section view of the monolithic hinge according to the invention, with the rod in the open position;

Fig. 2 is the same view of the hinge of Fig. 1 with the rod in the closed position;

Fig. 3 is the same view of the hinge of Fig. 1 with the rod in the position of additional opening;

Fig. 4 is a partial cross section view of the hinge, according to another aspect of the invention; and

Fig. 5 is a partial cross section view of the hinge, according to a further aspect of the invention.

With reference to the above described figures, the hinge according to the invention is composed of a monolithic body 1 which is provided, at a first end 2 thereof, with two recessed seats, respectively 3 and 4, the first being adapted for associating by welding with a first end of a lens-bearing tube and the second being adapted for containing the second end of the same tube, which is then fixed with a screw, not indicated, which threads into the hole 5.

The second end of said monolithic body 1 is provided with two tabs, of which only the lower one is illustrated, and indicated by the reference numeral 6, on which two through holes are provided, in which the hinge pivot 7 is inserted, allowing the articulation of the rod 8.

In order to achieve this, the rod 8 is provided with a tab 9 rigidly coupled thereto and ending with a disk-like head 10, the perimetral edge of which is provided with notches, respectively 11 and 12, which together form a multiple-position cam. Within said monolithic body 1, a cylindrical recess 13 is provided, which accommodates a similarly cylindrical spring 14 which pushes on the mushroom-shaped head 15 of a metal element having a stem 16

0239010

which is inserted between the coils of the spring.

Said head 15 is pushed by the spring 14 against the disk-like element 10, inserting the mushroom-like head in the notches 11 or 12 and thus providing a stable position for the rod 8.

By acting on the rod 8 in order to rotate it, the head 15 is pushed against the spring 14 which by compressing itself allows the rotation of said rod.

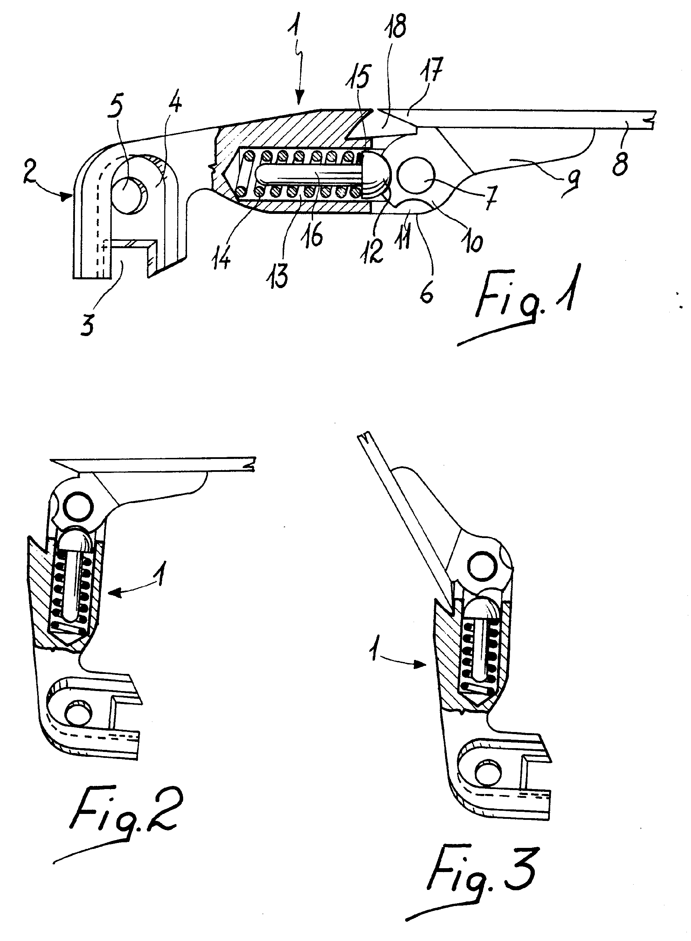

The two notches 11 and 12 are arranged so as to provide two stable positions for the rod 8, one at an opening of $90^{o}$ with respect to the front part of the spectacles as indicated in Figure 1, and one at a position which arranges the rod 8 substantially parallel to the front part of the spectacles as indicated in Figure 2.

Towards the front, i.e. towards the monolithic body 1, the rod 8 ends with a wedge-like tapered tab 17 which is contained within a milled region 18 of the monolithic body 1, so as to allow an additional opening for said rod as indicated in Figure 3.

This additional opening is of the elastic type, the rod tending to be returned to the open position of Fig. 1 as an effect of the push of the spring 14 on the head 15 which is in working position at the end of the notch 12 as illustrated in Figure 3.

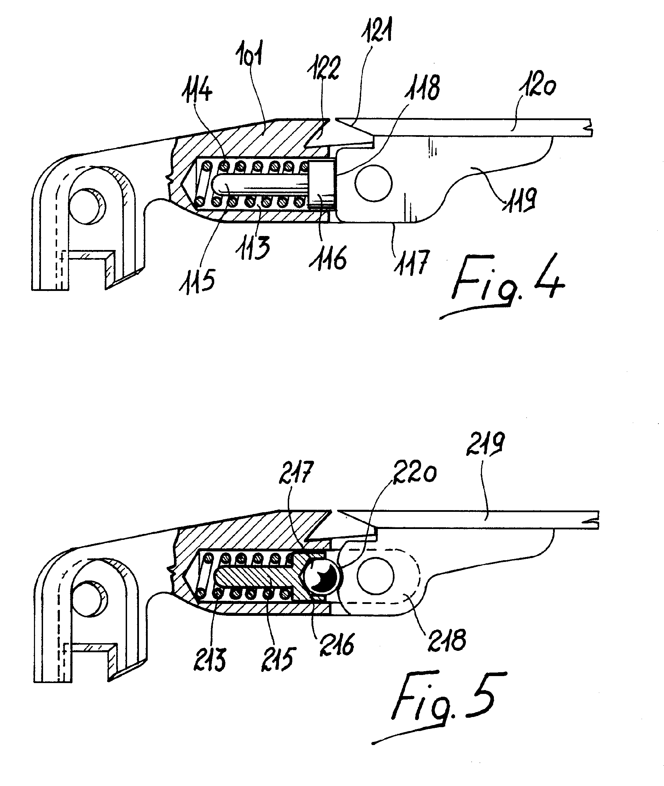

Figures 4 and 5 illustrate two further aspects of the invention.

In Fig. 4, a recess 113 is still provided in the monolithic body now indicated with the reference numeral 101, in which recess a cylindrical spring 114 is contained and acts on a small piston 115 which ends in a flat head 116.

Said flat head 116 acts on the two substantially mutually perpendicular faces 117 and 118 formed on the tab 119 provided on the front part of the rod 120.

Also in this case the front end of the rod 120, indicated with 121, is cut at an angle, and thus adapted for insertion within a milling 122 provided on the corresponding part of the monolithic body 101.

The hinge, according to this aspect of the invention, operates as previously described with two stable positions for the rod 120 and with a position of additional elastic opening for said rod.

Fig. 5 illustrates another aspect of the invention, in which the structural arrangement is slightly changed due to the presence of a small piston, now indicated with 215, which ends with a seat 216 in which a ball 217 is inserted and acts on the faces of a shaped cam 218 rigidly associated with the front part of the rod 219.

In this case too, seats 220 are provided, in which the ball 217, is partly accommodated, and pushed by the spring, now indicated with 213, providing stable positions for the rod.

Also in this case, an additional elastic opening is provided in the same manner.

The operation of all the versions illustrated is the same, and regarding the configuration it should be noted that all the devices are contained in a monolithic body which is part of the hinge element which will be associated with the front part of a pair of spectacles.

The rod is provided with only its front part in the shape of a cam adapted for interacting with the various types of pushing devices provided in said monolithic body.

It should be furthermore noted that said monolithic body is easily associable to the tubes or bezels, not illustrated in the figures, which are adapted for bearing the optical elements of the spectacles and for constituting the front part thereof.

Such a configuration allows the manufacture of a single part which thus contains in itself the elastic devices, the devices for connection to the rod or stem and the devices for connection to the front part.

The shape and the dimensions are particularly modest, so that the spectacles are free from aesthetical restrictions due to the type of connection and to the devices used to render the rod elastic.

Expediently, the material may be high-resistance steel or a metal alloy.

In any case the dimensions and the materials may be any according to the requirements.

CLAIMS

1) Elastic hinge for spectacles, characterized in that it comprises a monolithic body, having at least one side and another side, said body being provided, on said one side, with seats for engagement and coupling with a lens-bearing tube and said other side with a hinge for connection to a rod, in said body there being provided a seat for elastic means, adapted for interacting with the head of said rod, said head being in the shape of a cam, providing two stable positions of closing and opening and a position of additional opening with elastic return.

2) Hinge according to claim 1, characterized in that said monolithic body is provided with a substantially cylindrical recess in which are provided at least one elastic means, and at least one member pushed by said elastic means and adapted for interacting with a cam provided in the front part of said rod.

3) Hinge according to claim 1, characterized in that said elastic means are preferably constituted by a cylindrical spring.

4) Hinge according to claim 3, characterized in that said member adapted for interfering with said front part of said rod is constituted by an element, having an enlarged and rounded head, having a stem, inserted into the coils of said cylindrical spring.

5) Hinge according to claim 4, characterized in that said rounded head of said element interacts with the front part of said rod, said part being essentially disk-shaped with at least two notches complementarily shaped with respect to said head of said body pushed by the spring, said notches providing a stable position for the rod, said notches being mutually angularly spaced so as to provide a stable position for the rod substantially perpendicular to the front part of the spectacles and a second stable position substantially parallel to the front part of the spectacles.

6) Monolithic hinge according to claim 5, characterized in that besides said two stable positions, a position of additional opening is provided, equal to a rotation of the rod in a divergent direction with respect to a normal position, said rotation implying the motion of said element in antagonism with the action of said spring, the action of said spring being intended to return the rod in a position perpendicular with respect to the front part.

7) Hinge according to claim 1, characterized in that it comprises a pusher element, having a flat head interacting with two mutually substantially perpendicular faces of a tab rigidly associated with said rod, said two faces providing said two stable positions for said rod.

8) Hinge according to claim 7, characterized in that it comprises an element pushed by a cylindrical spring and provided in its front part with a seat for the insertion of a ball, said ball being the element which interacts with said front tab which is rigidly associated with said rod, said tab being provided with seats for the insertion of said ball in such positions as to provide stable positions for the rod.

9) Hinge according to claim 1, characterized in that said monolithic body is provided, in its side opposite to the side pivoting with the rod, with means for connection to said metal tubes adapted for constituting the front part of the spectacles and for supporting the lenses.

Fig.1

Fig.2

Fig.3

Fig. 4

Fig. 5